# EUROPÄISCHE PATENTANMELDUNG

(11) **EP 1 010 977 A1**
(43) Veröffentlichungstag der Anmeldung: **21.06.2000**
(21) Anmeldenummer: 98811234.8
(22) Anmeldetag: 16.12.1998
(51) Int. Cl.: G01N 30/96, G01N 30/06

(54) **Verfahren und Vorrichtung zur automatischen Vorbereitung einer Probe für ein Analyseverfahren, insbesondere für die Ionenchromatographie**

(71) Anmelder: METROHM AG, 9100 Herisau (CH)
(72) Erfinder: Schäfer, Helwig, 9100 Herisau (CH)
(74) Vertreter: Hepp, Dieter

(57) **Zusammenfassung**

In einem Verfahren und einer Vorrichtung zur Probenvorbereitung, beispielsweise für die Ionenchromatographie wird eine Probe im On-line-Betrieb vorbereitet. Dazu wird eine kleine Probenmenge (P) in eine Probenschleife (10) eingegeben und mit einem inerten Transportmedium (T) in ein Vorbereitungskompartment (11) geführt. Die Probenmenge (P) wird beim Durchfluss durch das Vorbereitungskompartment vorbereitet. Das Vorbereitungskompartment (11, 11', 11'') wird periodisch, vorzugsweise nach jeder Probe regeneriert. Die vorbereitete Probe wird anschliessend einer Anordnung für die Ionenchromatographie oder für eine andere Analysentechnik zugeführt.

## Beschreibung

Die Erfindung betrifft ein Verfahren und eine Vorrichtung zur automatischen Vorbereitung einer Probe für ein Analyseverfahren, z.B. für die Ionenchromatographie.

Die Analyse von Ionen enthaltenden Proben mittels Ionenchromatographie ist seit längerem bekannt. Für die Ionenchromatographie müssen die zu analysierenden Proben in einem vorgängigen Vorbereitungsschritt aufbereitet werden. Dabei werden in einer Vorbereitungsanordnung diejenigen Ionen aus der Probe entfernt, die für die Analyse nicht relevant oder störend sind. Je nach Typ der zu entfernenden Ionen kommen verschiedene Trennverfahren zur Anwendung, insbesondere Neutralisation, Fällung, Absorption Redox-Reaktionen oder Ionenpaarbildung.

Zur Probenvorbereitung gemäss Stand der Technik wurde bisher die Probe in eine Kartusche gegeben, welche mit entsprechenden Mitteln zum Auslösen des Trennverfahrens bestückt ist. Der Nachteil bei diesen bekannten Verfahren besteht darin, dass die Probe manuell in die Kartusche gegeben und anschliessend manuell der Ionenchromatographie zugeführt werden muss. Dadurch wird der Zeitaufwand für eine Chromatographie vergrössert und die Wirtschaftlichkeit verringert. Ausserdem sind solche Kartuschen nach einer gewissen Zeit auf gebraucht und müssen ersetzt werden. Dies ist aus wirtschaftlichen Gründe nachteilig. Ausserdem ändert sich die Wirksamkeit einer Kartusche im Laufe der Zeit.

Aus dem US Patent 5 571 725 ist beispielsweise ein Verfahren zur Probenvorbereitung bekannt. Ionen werden durch Fällung aus der Probe entfernt.

Aus US 5 518 622 ist eine elektrochemische Vorbereitung für eine flüssige Probe bekannt. Ein ähnliches Verfahren ist aus US 5 597 481 bekannt.

Alle diese Verfahren sind mit den oben erwähnten Nachteilen, insbesondere hinsichtlich Bedienungsfreundlichkeit und Wirtschaftlichkeit, behaftet.

Aus der DE 3 442 227 ist ein Verfahren und eine Vorrichtung zur ionenchromatographischen Bestimmung des Spurengehalts von wässrigen Proben bekannt. Die Probe gemäss dieser Publikation wird durch Reinstwasser von einer Probeaufgabeeinrichtung zu einer Anreicherungssäule und schliesslich zu einer Trennsäule geführt.

Es ist eine Aufgabe der vorliegenden Erfindung, die Nachteile des Bekannten zu vermeiden, insbesondere ein Verfahren und eine Vorrichtung zur automatischen Vorbereitung einer Probe zu schaffen, welche einen wirtschaftlichen Analysebetrieb erlauben, welche einfach in Herstellung, Betrieb und Wartung sind und welche eine ausreichende Qualität der Probenvorbereitung gewährleisten.

Erfinderungsgemäss werden diese Aufgaben mit einem Verfahren und einer Vorrichtung gemäss den unabhängigen Patentansprü-chen gelöst.

In einem Verfahren zur automatischen Vorbereitung einer flüssigen Probe für ein Analyseverfahren, z.B. für die Ionenchromatographie, HPLC, Atomabsorption oder FIA, wird in einem ersten Schritt eine dosierte Probenmenge in eine Probenschleife injiziert. Die Probenmenge wird vorzugsweise sehr klein gewählt. Typischerweise beträgt das Volumen der injizierten Probenmenge weniger als 100 µl vorteilhaft etwa 10 - 20 µl. Es können aber auch grössere Proben, z.B. 1 ml verwendet werden.

Die in die Probenschleife injizierte Probenmenge wird anschliessend mit einem inerten Transportmedium in ein Vorbereitungskompartment transportiert. Als inertes Transportmedium wird beispielsweise reines Wasser eingesetzt. Die Probenmenge ist im kontinuierlichen Fluss des inerten Transportmediums eingeschlossen und wird durch dieses in der Art eines Pfropfens transportiert.

Die in das Vorbereitungskompartment transportierte Probenmenge wird im Durchfluss durch das Kompartment für die Ionenchromatographie geführt und damit vorbereitet. Insbesondere erfolgt die Vorbereitung durch Neutralisation, Fällung, Absorption, Redox-Reaktionen oder Ionenpaarbildung.

Nach erfolgter Vorbereitung wird die nun vorbereitete Probenmenge zu einer Ionenchromatographie-Anordnung weitergeführt. Vorteilhaft erfolgt der Weitertransport ebenfalls mit dem inerten Transportmedium.

Mit dem erfindungsgemässen Verfahren ist ein On-line-Betrieb vom Zeitpunkt der Injektion der Probenmenge bis zur Detektion möglich. Die Probenmenge wird durch das Transportmedium im Durchfluss durch das Vorbereitungskompartment transportiert und direkt einer Ionenchromatographie-Anordnung zugeführt. Das manuelle Einsetzen und Entfernen der Probe in eine Vorbereitungskartusche entfällt dabei.

In einem bevorzugten Ausführungsbeispiel wird die vorbereitete Probe zwischen dem Vorbereitungskompartment und der Ionenchromatographie-Anordnung durch eine Anreicherungsanordnung geführt. Die Anreicherungsanordnung besteht insbesondere aus einer Anreicherungssäule oder aus einer Anreicherungsschleife, die ausreichend gross zur Aufnahme eines wesentlichen Teils der Probe ist. Die Anreicherungsanordnung ihrerseits ist mit einer Zufuhr für ein Elutionsmittel und mit einer Trennsäule einer Ionenchromatographie-Anordnung verbindbar oder verbunden. Nach der Anreicherung wird die angereicherte Probe durch das Elutionsmittel in die Trennsäule transportiert.

In einem besonders bevorzugten Ausführungsbeispiel wird das Vorbereitungskompartment periodisch, vorzugsweise nach jeder Probe regeneriert und optional equilibriert. Damit wird ein kontinuierlicher Betrieb gewährleistet, bei dem immer gleiche Ausgangsbedingungen vor der Probenvorbereitung herrschen. Verbrauchte Kartuschen müssen nicht wie im Stand der Technik entsorgt werden. Statt dessen wird das verbrauchte Vorbereitungskompartment regeneriert.

Vorzugsweise wird das Vorbereitungskompartment zur Vorbereitung der Probe in eine Lücke in einem Leitungszweig eingesetzt, der die Probenschlaufe zur Injektion der Probe mit der Ionenchromatographie-Anordnung verbindet. Zur Regeneration wird das Vorbereitungskompartment aus dem Leitungszweig entfernt und stattdessen wird in den Leitungszweig ein frisch regeneriertes, zweites Vorbereitungskompartment eingesetzt.

Das verbrauchte Vorbereitungskompartment wird vorteilhaft zur Regeneration in eine Lücke in einem zweiten Leitungszweig eingesetzt, der mit einer Zufuhr für ein Behandlungsmittel, beispielsweise ein Mittel zum Regenerieren oder Equilibrieren, verbunden oder verbindbar ist.

Die bei der Regeneration aus dem Vorbereitungskompartment entfernten Stoffe können anschliessend einer weiteren Analyse, beispielsweise einer HPLC (High Pressure Liquid Chromatography) zugeführt werden. Die weitere Analysevorrichtung kann direkt mit dem zweiten Leitungszweig verbunden werden.

Die erfindungsgemässe Vorrichtung zur automatischen Vorbereitung einer Probe für die Ionenchromatographie weist Mittel zum Injizieren einer dosierten Probenmenge in eine Probenschleife auf. Die Probenmenge wird sehr klein gewählt, vorzugsweise kleiner als etwa 100 µl, insbesondere etwa 10 - 20 µl.

Die Vorrichtung weist ausserdem Mittel zum Beifügen eines inerten Transportmediums in die Probenschleife auf. Nachdem die Probenmenge in die Probenschleife eingegeben wird und die Injektionsmittel von der Probenschleife getrennt sind, wird das Transportmedium in die Probenschleife beigefügt. Dadurch wird die Probenmenge durch einen mit der Probenschleife verbundenen Leitungszweig bewegt.

Mit dem Leitungszweig ist wenigstens ein Vorbereitungskompartment verbunden oder verbindbar. Das Vorbereitungskompartment ist ausserdem direkt oder indirekt mit einer Anlage zur Ionenchromatographie verbunden oder verbindbar. Typischerweise ist das Vorbereitungskompartment in eine Lücke in dem Leitungszweig eingesetzt, der die Probenschleife mit der Ionenchromatographie-Anordnung verbindet.

Vorzugsweise sind zwischen dem Vorbereitungskompartment und der Anordnung für die Ionenchromatographie zusätzlich Mittel zum Anreichern und/oder Transferieren der vorbereiteten Probe vorgesehen. Die Mittel zum Anreichern der Probe können insbesondere durch eine Anreicherungssäule oder durch eine Schleife zur Aufnahme der vorbereiteten Probe ausgebildet sein. Die Schleife muss ausreichend gross gewählt sein, um im wesentlichen entweder die ganze Probenmenge oder einen aliquoten Teil aus dem mittleren Segment des Probenpfropfens aufnehmen zu können. Die Probenmenge wird durch das inerte Transpormedium durch das Vorbereitungskompartment und in die optionale Anreicherungsanordnung transportiert. In der Anreicherungsanordnung (oder bei fehlen dieser in einem Ventil) wird die vorbereitete Probe mit einem Elutionsmittel einer Trennsäule für die Ionenchromatographie zugeführt.

Das Vorbereitungskompartment ist vorzugsweise in die Lücke im Leitungszweig zwischen der Probenschleife und der Ionenchromatographie-Anordnung einsetzbar. Ausserdem sind Mittel zum Ersetzen eines verbrauchten Vorbereitungskompartments durch ein frisches, regeneriertes Kompartment vorgesehen.

Vorteilhaft ist in der Vorrichtung wenigstens ein weiterer Leitungszweig vorgesehen, der mit einem Behandlungsmedium, beispielsweise einem Regenerationsmittel oder einem Equilibrierungsmittel beaufschlagbar ist. Das verbrauchte Vorbereitungskompartment ist zur Regeneration in eine Lücke in diesem Leitungszweig einsetzbar.

In einem besonders bevorzugten Ausführungsbeispiel ist jedes Vorbereitungskompartment auf einer geschlossenen Bahn bewegbar gelagert und die Lücken der Leitungazweige sind in Bezug auf diese Bahn derart angeordnet, dass jedes Regenerationskompartment durch eine entlang einer Bahn verlaufende Bewegung in einen beliebigen Leitungszweig einsetzbar ist.

Mit einer solchen Vorrichtung ist ein besonders wirtschaftlicher und rascher Betrieb, insbesondere eine Regeneration möglich. Dazu sind eine Mehrzahl von Vorbereitungskompartments vorgesehen (beispielsweise drei) welche abwechselnd zur Probenvorbereitung dienen und regeneriert bzw. equilibriert werden.

Vorteilhaft sind alle Vorbereitungskompartments auf einer gemeinsamen, geschlossenen Bahn bewegbar gelagert.

Die Vorbereitungskompartments können durch eine Wirkverbindung derart miteinander gekoppelt sein, dass sie nur gemeinsam bewegt werden können. Damit hängt die Position eines Vorbereitungskompartments von der Position der anderen Vorbereitungskompartments ab. Die Vorbereitungskompartments sind in eine der Anzahl der Kompartments entsprechende Anzahl von Arbeitspositionen bringbar. Damit ist immer ein frisch regeneriertes Vorbereitungskompartment in den die Probenschleife mit der Ionenchromatographie-Anordnung verbindenden Leitungszweig eingesetzt.

Vorteilhaft können alle Vorbereitungskompartments an einem gemeinsamen bewegbar, insbesondere drehbar gelagerten Verbindungskörper befestigt sein. Vorteilhaft ist eine drehbare Trommel mit Öffnungen zur Aufnahme der Kompartments.

In einem bevorzugten Ausführungsbeispiel ist der Ausgang des zweiten Leitungszweiges, in den das Vorbereitungskompartment zur Regeneration einsetzbar ist, mit einer weiteren Analysevorrichtung verbunden oder verbindbar. Die in der Regeneration aus dem Kompartment entfernten Ionen bzw. Verbindungen können dadurch ebenfalls analysiert werden.

Ein weiterer Aspekt der Erfindung besteht in der Regenerierbarkeit des Vorbereitungskompartments an sich. Die Vorrichtung zur Vorbereitung von Proben für die Ionenchromatographie gemäss diesem Aspekt der Erfindung besteht aus einer Einheit zur Vorbereitung einer Probenmenge, insbesondere durch Neutralisation, Fällung, Absorption, Redox-Reaktion oder Ionenpaarbildung. Erfindungsgemäss ist die Einheit zur Vorbereitung der Probe regenerierbar ausgebildet.

Bevorzugt ist die regenerierbare Einheit zur Vorbereitung der Probe in einen Leitungszweig zwischen Mitteln zum Zuführen einer Probenmenge und einer Ionenchromatographie-Anordnung einsetzbar. Zur Regeneration ist die Einheit in wenigstens einen weiteren, zweiten Leitungszweig einsetzbar. Der weitere Leitungszweig ist mit einem Behandlungsmittel, beispielsweise einem Regenerationsmittel oder einem Equilibrierungsmittel beaufschlagbar.

Die vorangehend beschriebene bewegliche Anordnung der Vorbereitungskompartments ist der technischen Ausgestaltung der Haltevorrichtung für Suppressoren in der Ionenchromatographie, die in der EP 725 272 der gleichen Anmelderin gezeigt ist, ähnlich. Der Inhalt der EP 725 272 wird hiermit ausdrücklich in die vorliegende Anmeldung aufgenommen. Die in EP 725 272 gezeigte technische Realisierung zur Regeneration von Suppressoren in der Ionenchromatographie lässt sich erfindungs gemäss zur Regenerierung von Kompartments für die Probenvorbereitung verwenden.

Das Vorbereitungskompartment kann ausserdem mit verschiedenen Analysevorrichtungen verbindbar sein. Vorteilhaft sind dazu mehrere Leitungszweige vorgesehen, die mit verschiedenen Analysesystemen verbunden sind und in die das Vorbereitungskompartment wahlweise einsetzbar ist.

Die Erfindung wird im Folgenden in Ausführungsbeispielen und anhand der Zeichnungen näher erläutert. Es zeigen:
- Figur 1: schematische Darstellung einer Vorrichtung zur Probenvorbereitung und zur Ionenchromatographie,
- Figur 2: schematische Darstellung der Probenvorbereitung, Regenerierung und Equilibrierung und
- Figur 3: schematische Darstellung einer Halterung für drei Vorbereitungskompartments.

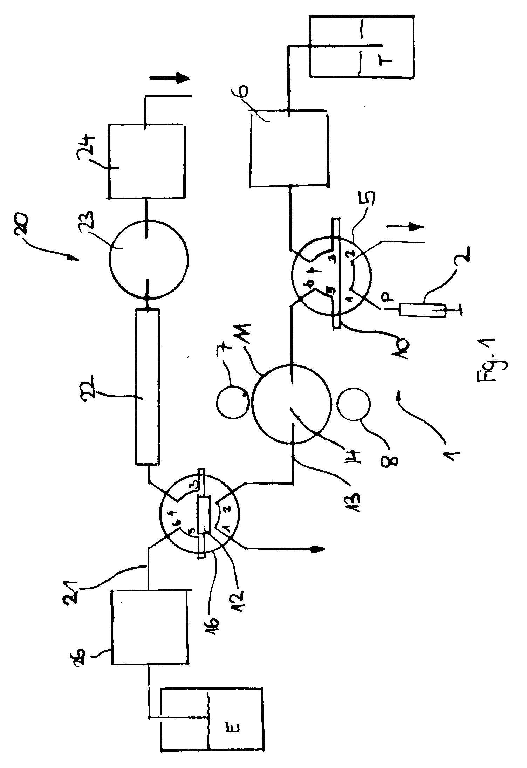

Figur 1 zeigt schematisch eine Ausführungsform der erfindungsgemässen Vorrichtung.

Figur 1 zeigt eine Anordnung 20 zur Ionenchromatographie und eine Vorrichtung 1 zur Vorbereitung von Probenmengen P für die Ionenchromatographie.

Die Anordnung 20 für die Ionenchromatographie ist konventionell aufgebaut und besteht im wesentlichen aus einer Trennsäule 22, einem Suppressor 23 und einem Detektor 24. Ein Elutionsmittel E ist mittels einer Pumpe 26 durch eine Zufuhr 21 in ein Mehrwegventil 16 leitbar. In dem Mehrwegventil 16 vermischt sich das Elutionsmittel E mit der vorbereiteten Probenmenge P und kann der Trennsäule 22 zugeführt werden.

In das Ventil 16 lässt sich automatisch im On-line-Betrieb eine in der Vorrichtung 1 vorbereitete Probenmenge P zuführen.

Die Vorrichtung 1 zum Vorbereiten der Probe besteht im wesentlichen aus Injektionsmitteln 2 zum Beifügen einer dosierten Probenmenge P in eine Probenschleife 10. Das Volumen der injizierten Probenmenge P beträgt weniger als 100 µl, etwa 10 - 20 µl.

Die Probenschleife 10 ist auf der einen Seite mit einer Pumpe 6 zum Zufügen eines inerten Transportmediums T und auf der anderen Seite mit einem Vorbereitungskompartment 11 zur Probenvorbereitung verbunden bzw. verbindbar. Das Vorbereitungskompartment 11 ist in eine Lücke 14 des Leitungszweigs 13 eingesetzt, der die Probenschleife 10 mit dem Ventil 16 verbindet.

Im Ventil 16 ist eine Anreicherungsanordnung 12 zum Anreichern der vorbereiteten Probe vorgesehen. Die Anreicherungsanordnung 12 ist in Figur 1 schematisch als Anreicherungssäule gezeigt. Es ist aber auch denkbar die Anreicherungsanordnung als Anreicherungsschleife auszubilden, welche ausreichend gross zur Aufnahme der vorbereiteten Probenmenge ist, d.h. etwa ein Volumen um die 100 µl aufweist. Das Volumen kann alternativ auch kleiner gewählt werden, um einen aus dem Probevolumen herausgeschnittenen aliquoten Teil aufzunehmen.

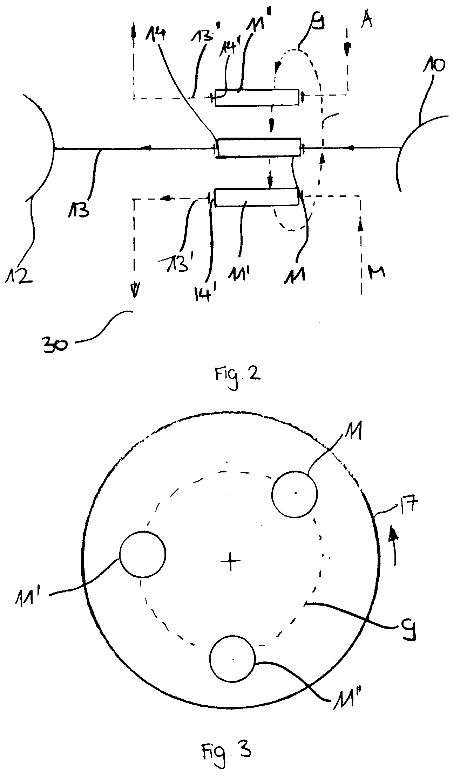

Das Vorbereitungskompartment 11 ist austauschbar im Leitungszweig 13 eingesetzt und kann zur Regeneration einer Regenerationsstation 7 und einer Equilibrierungsstation 8 zugeführt werden. Sobald das Vorbereitungskompartment 11 aufgebraucht ist, wird es regeneriert und durch ein frisch regeneriertes Kompartment 11' (siehe Figur 2) ersetzt. Es ist auch denkbar, die Regeneration in mehreren Stufen und/oder Leitungszweigen durchzuführen.

In der Vorrichtung gemäss Figur 1 erfolgt ein On-line-Betrieb für die Probenvorbereitung. Dazu wird die dosierte Probenmenge P mit den Injektionsmitteln 2 in die Probenschleife 10 eingefügt. Die Probenschleife 10 ist in einem Ventil 5 integriert. Zur Eingabe der Probenmenge P sind die Anschlüsse 1 und 5, 2 und 3 sowie 4 und 6 des Ventils 5 miteinander verbunden und die Anschlüsse 5 und 6 sowie 3 und 4 getrennt. Nach Eingabe der Probenmenge P werden die Anschlüsse 1 und 2, 3 und 4 sowie 5 und 6 des Ventils 5 miteinander verbunden wobei das Beifügen eines inerten Transportmediums T in die Probenschleife 10 erlaubt wird. Durch kontinuierliches Fördern des Transportmediums T wird die in der Probenschleife 10 enthaltene Probenmenge P in der Art eines Pfropfens durch den Leitungszweig 13 und durch das Vorbereitungskompartment 11 gefördert. Beim Durchfluss durch das Vorbereitungskomparment 11 erfolgt Vorbereitung der Probe, d.h. Entfernung unerwünschter Ionen durch entsprechende Mechanismen. Als reaktiver Füllstoft dienen beispielsweise:
- Säure bzw. basische Kationenaustauscher für Neutralisation
- Ionenbeladene (z.B.AG⁺) Austauscher für Fällung
- RP-Phasen oder Aktivkohle für Absorption
- Redoxpolymere für Redox-Reaktionen
- Ionenbelandene Austauscher für Ionenpaar-Bildung

Nach Verlassen des Vorbereitungskompartments 11 wird die vorbereitete Probenmenge durch den Leitungszweig 13 dem Ventil 16 zugeführt. Dazu sind die Anschlüsse 2 und 3 sowie 1 und 5 des Ventils 16 miteinander verbunden. Die vorbereitete Probe wird damit in der Anreicherungssäule 12 abgelagert. Sobald die Anreicherungssäule 12 mit der vorbereiteten Probe gefüllt ist, werden die Anschlüsse 1 und 2 des Ventil 16 verbunden und das inerte Transportmedium einem Abfluss zugeführt. Gleichzeitig werden die Anschlüsse 5 und 6 sowie 3 und 4 miteinander verbunden. Das mit der Pumpe 26 geförderte Elutionsmittel wird durch die Zufuhr 21 durch das Ventil 16 geführt und transportiert die in der Anreicherungssäule 12 zurückgehaltene Probenmenge zu der Anordnung 20 für die Ionenchromatographie, namentlich durch die Trennsäule 22.

Es ist denkbar, mehrere zusätzliche Leistungszweige vorzusehen, die mit unterschiedlichen Analysesystemen verbunden sind.

Figur 2 zeigt schematisch die periodische Regenerierung eines Kompartments 11 für die Probenvorbereitung. Das Kompartment 11 ist in eine Lücke 14 im Leitungszweig 13 eingesetzt, der die Probeschleife 10 mit der Anreicherungsanordnung verbindet. Das Vorbereitungskompartment 11 lässt sich im Karussellbetrieb entlang einer geschlossenen Bahn 9 aus der Lücke 14 entfernen und in eine Lücke 14' in einem weiteren Leitungszweig 13' einsetzen. Ein aufgebrauchtes, in die Lücke 14' eingesetztes Vorbereitungskompartment 11' wird durch den Leitungszweig 13' mit einem Behandlungsmedium M beaufschlagt und regeneriert. Die bei der Regenierung aus dem Vorbereitungskompartment 11' ausgewaschenen Ionen können einer weiteren Analysevorrichtung 30, beispielsweise einem HPLC zugeführt werden.

Nach erfolgter Regenerierung wird das regenerierte Vorbereitungskompartment 11' in eine Lücke 14'' eines weiteren Leitungszweiges 13'' eingesetzt. Das in die Lücke 14'' eingesetzte Vorbereitungskompartment 11'' wird einer Behandlung mit einem Equilibrierungsmittel A unterzogen. Nach erfolgter Equilibrierung kann das für eine weitere Probenvorbereitung bereite Vorbereitungskompartment wieder in den ersten Leitungszweig 14 eingesetzt werden. Die Probenvorbereitung erfolgt also in einem Karussellbetrieb, wobei jeweils gleichzeitig ein aufgebrauchtes Kompartment durch ein frisch regeneriertes ersetzt und der Regenerierung zugeführt wird. Selbstverständlich sind auch komplexere Vorgänge z.B. Probenvorbereitung, Reinigung, Regenerierung und Waschen möglich.

Prinzipiell sind verschiedene Möglichkeiten zum Austausch der einzelnen Kompartments denkbar. Figur 3 zeigt schematisch einen Träger 17, in welchem drei Behandlungskompartments 11, 11' und 11'' in Öffnungen gehalten sind. Der karussellartig ausgebildete Träger 17 ist um seine Achse drehbar gelagert und erlaubt die Bewegung der Vorbereitungskompartments 11, 11' und 11'' entlang der Bahn 9.

Selbstverständlich ist auch ein anderer Betrieb der Regenerierung als mit einem Karussell, beispielsweise durch lineare Bewegung aber auch durch Ventilanordnungen denkbar.

## Patentansprüche

1. Verfahren zur automatischen Vorbereitung einer Probe und anschliessender Analyse, insbesondere Ionenchromatographie, bestehend aus den Schritten
- Injizieren einer dosierten Probenmenge (P), vorzugsweise weniger als 100 µl, in eine Probenschleife (10)
- Transportieren der Probenmenge (10) in ein Vorbereitungskompartment (11) mittels eines inerten Transportmediums (T)
- Vorbereiten der Probenmenge (P) im Durchfluss durch das Vorbereitungskompartment (11), insbesondere durch Neutralisation, Fällung, Absorption Redox-Reaktion oder Ionenpaarbildung
- Transportieren der vorbereiteten Probenmenge (P) zu einer Analyse-Anordnung, insbesondere zu einer Ionenchromatographie-Anordnung (20).
- Durchführen der Analyse, insbesonder der Ionenchromatographie

2. Verfahren nach Anspruch 1, dadurch gekennzeichnet, dass die vorbereitete Probenmenge (P) zwischen dem Vorbereitungskompartment (11) und der Anordnung (20) für die Ionenchromatographie durch eine Anreicherungsanordnung (12) geführt wird, insbesondere durch eine Anreicherungssäule oder durch eine Anreicherungsschleife, wobei die Anreicherungsanordnung (12) mit einer Zufuhr (21) für ein Elutionsmittel und einer Trennsäule (22) einer Ionenchromatographie-Anordnung (20) verbindbar oder verbunden ist.

3. Verfahren nach einem der Ansprüche 1 oder 2, dadurch gekennzeichnet, dass das Vorbereitungskompartment (11) periodisch, vorzugsweise nach jeder Probenvorbereitung, regeneriert und vorzugsweise equilibriert wird.

4. Verfahren nach Anspruch 3, dadurch gekennzeichnet, dass das Verbindungskompartment (11) zur Vorbereitung der Probe in einen die Probenschleife (10) mit der Anordnung (20) für die Ionenchromatographie verbindenden Leitungszweig (13) eingesetzt wird, dass zur Regenerierung und Equilibrierung das Vorbereitungskompartment (11) aus dem Leitungszweig (13) entfernt wird und dass stattdessen ein regeneriertes Vorbereitungskompartment (11'') in den Leitungszweig (13) eingesetzt wird.

5. Verfahren nach Anspruch 4, dadurch gekennzeichnet, dass das verbrauchte Vorbereitungskompartment (11) zur Regenerierung in einen zweiten Leitungszweig (13') eingesetzt wird, der mit einer Zufuhr für ein Regenerationsmedium (M) verbindbar oder verbunden ist.

6. Verfahren zur Vorbereitung einer Probe für die Ionenchromatographie, insbesondere nach einem der Ansprüche 1 bis 5, in welchem eine Probenmenge (P) zur Probevorbereitung durch ein Vorbereitungskompartment (11) geführt wird, dadurch gekennzeichnet, dass das Vorbereitungskompartment (11) periodisch, vorzugsweise nach dem Durchlauf jeder Probe regeneriert und/oder euqilibriert wird.

7. Verfahren nach Anspruch 6, dadurch gekennzeichnet, dass die bei der Regeneration und/oder Equilibrierung aus dem verbrauchten Vorbereitungskompartment (11') entfernten Stoffe einer weiteren Analyse, insbesondere einer HPLC (30) zugeführt werden.

8. Vorrichtung (1) zur automatischen Vorbereitung einer Probenmenge (P) für ein Analyseverfahren, insbesondere für die Ionenchromatographie, mit
- Injektionsmitteln (2) zum Injizieren einer dosierten Probenmenge (P), vorzugsweise kleiner als 100 µl, insbesondere 10 - 20 µl, in eine Probenschleife (10)
- Mitteln (3) zum Beifügen eines inerten Transportmediums (T) in die Probenschleife (10),
- und wenigstens einem Vorbereitungskomparment (11, 11', 11''), das mit der Probenschleife (10) verbindbar oder verbunden ist und das direkt oder indirekt mit einer Analyse-Anlage (20) insbesondere zur Ionenchromatographie verbunden oder verbindbar ist.

9. Vorrichtung nach Anspruch 8, dadurch gekennzeichnet, dass zwischen dem Vorbereitungskompartment (11) und der Anlage (20) zur Ionenchromatographie eine Anreicherungsanordnung (12) zum Anreichern der vorbereiteten Probenmenge (P) vorgesehen ist, dass insbesondere eine Schleife zur Aufnahme der gesamten Probe oder eine Anreicherungssäule oder eine Schleife zur Aufnahme eines aliquoten Teils der Probenmenge vorgesehen ist.

10. Vorrichtung nach Anspruch 8 oder 9, dadurch gekennzeichnet, dass das Vorbereitungskompartment (11, 11', 11'') in einem Leitungszweig (13) zwischen der Probenschleife (10) und der Anlage (20) zur Ionenchromatographie einsetzbar ist und dass Mittel (17) zum Ersetzen eines aufgebrauchten Vorbereitungskompartments (11) durch ein regeneriertes Kompartment (11'') vorgesehen sind.

11. Vorrichtung nach Anspruch 10, dadurch gekennzeichnet, dass zur Regenerierung des Vorbereitungskompartments (11) wenigstens ein weiterer Leitungszweig (13', 13'') vorgesehen ist, der mit einem Regenerierungsmittel und/ oder mit einem Equilibrierungsmittel beaufschlagbar ist und in den das aufgebrauchte Vorbereitungskompartment (11) einsetzbar ist.

12. Vorrichtung nach einem der Ansprüche 9 bis 11, dadurch gekennzeichnet, dass mehrere Vorbereitungskompartments (11, 11', 11'') vorgesehen sind, die auf einer geschlossenen Bahn (9) bewegbar gelagert sind und dass Lücken (14, 14', 14'') in den Leitungszweigen (13, 13', 13'') in Bezug auf diese Bahn (9) derart angeordnet sind, dass jedes Vorbereitungskompartment (11, 11', 11'') durch eine entlang seiner Bahn verlaufende Bewegung in einen beliebigen Leitungszweig (13, 13', 13'') einsetzbar ist.

13. Vorrichtung nach Anspruch 11, dadurch gekennzeichnet, dass alle Vorbereitungskompartments (11, 11', 11'') auf einer gemeinsamen, geschlossenen Bahn (9) bewegbar gelagert sind.

14. Vorrichtung nach einem der Ansprüche 12 oder 13, dadurch gekennzeichnet, dass die Vorbereitungskompartments (11, 11', 11'') durch eine Wirkverbindung (17) derart gekoppelt sind, dass sie nur gemeinsam bewegt werden können, sodass die Position eines Vorbereitungskompartments (11) von der Position der anderen Vorbereitunskompartments (11', 11'') abhängig ist und dass die Vorbereitungskompartments (11, 11', 11'') in eine der Anzahl Vorbereitungskompartments entsprechende Anzahl von Arbeitspositionen (7, 8) bringbar sind.

15. Vorrichtung nach einem der Ansprüche 8 bis 14, dadurch gekennzeichnet, dass alle Vorbereitungskompartments (11, 11', 11'') an einem gemeinsamen, bewegbar, vorzugsweise drehbar gelagerten Verbindungskörper (17) befestigt sind.

16. Vorrichtung zur Vorbereitung von Proben für ein Analyseverfahren, insbesondere für die Ionenchromatographie mit wenigstens einem Vorbereitungskompartment (11, 11', 11'') zur Vorbereitung einer Probenmenge (P), insbesondere durch Neutralisation, Fällung, Absorption, Redox-Reaktion oder Ionenpaarbildung
dadurch gekennzeichnet, dass das Vorbereitungskompartment (11, 11', 11'') regenerierbar ausgebildet ist.

17. Vorrichtung nach Anspruch 16, dadurch gekennzeichnet, dass das Vorbereitungskompartment (11, 11', 11'') alternierend in einen Leitungszweig zwischen einer Probenschleife (10) und einer Anordnung (20) zur Ionenchromatographie einsetzbar ist und dass die Vorbereitungskompartments (11, 11', 11'') zur Regeneration in wenigstens einen weiteren Leitungszweig (13', 13'') einsetzbar sind, wobei der weitere Leitungszweig (13', 13'') mit einem Behandlungsmedium (M), insbesondere einem Regenerationsmittel oder einem Equilibrierungsmittel beaufschlagbar ist.

18. Vorrichtung nach einem der Ansprüche 8 bis 17, dadurch gekennzeichnet, dass der Ausgang des zweiten Leitungszweigs (13') mit einer weiteren Analysevorrichtung (30) verbunden oder verbindbar ist.

19. Vorrichtung nach einem der Asprüche 10 bis 5 oder 17 bis 18, dadurch gekennzeichnet, dass zur Regeneration mehrere weitere Leitungszweige (13', 13'') vorhanden sind, welche mit mehr als einem Regenerierungsmittel baufschlagbar sind.

20. Vorrichtung nach einem der Ansprüche 8 bis 19, dadurch gekennzeichnet, dass das Vorbereitungskompartment (11, 11', 11'') mit verschiedenen Analysesystemen verbindbar ist.
